# EUROPÄISCHE PATENTSCHRIFT

(11) **EP 1 959 554 B1**
(45) Veröffentlichungstag und Bekanntmachung des Hinweises auf die Patenterteilung: **16.06.2010**
(21) Anmeldenummer: 08000986.3
(22) Anmeldetag: 19.01.2008
(51) Int. Cl.: H02P 9/00, H02P 23/06

(54) **Umrichterschaltung für einen doppeltgespeisten Asynchrongenerator mit variabler Leistungsabgabe und Verfahren zu deren Betrieb**
Converter circuit for a doubly-fed asynchronous generator with variable output power and method for its operation
Circuit convertisseur pour un générateur asynchrone à double alimentation avec puissance fournie variable et son procédé de fonctionnement

(30) Priorität: 14.02.2007 DE 102007007286
(43) Veröffentlichungstag der Anmeldung: 20.08.2008
(73) Patentinhaber: SEMIKRON Elektronik GmbH & Co. KG, 90431 Nürnberg (DE)
(72) Erfinder: Schreiber, Dejan, 90408 Nürnberg (DE)

(56) Entgegenhaltungen:
- EP-A- 1 244 203
- EP-A- 1 313 206
- EP-A- 1 513 251
- US-A1- 2003 151 259

## Beschreibung

Die Erfindung betrifft eine Umrichterschaltung für einen an einem Spannungsnetz anschließbaren, doppeltgespeisten Asynchrongeneratör mit variabler Leistungsabgabe, insbesondere für einen Windkraftgenerator, und ein Verfahren zum Betrieb einer derartigen Umrichterschaltung.

Asynchrongeneratoren mit variabler Leistungsabgabe sind heute im Bereich der Energiegewinnung sehr verbreitet. Insbesondere sind diese in Windkraftgeneratoren im Einsatz, deren Leistungsabgabe naturgemäß stark mit dem gerade vorherrschenden Wind schwankt. Bei derartigen Asynchrongeneratoren ist eine variable Betriebsgeschwindigkeit von großem Vorteil. Ein Windkraftgenerator mit variabler Geschwindigkeit erlaubt nämlich eine bessere Ausnutzung von schwachem Wind und bietet weniger mechanischen Stress für den Turm des Windkraftgenerators bei starkem Wind.

Zum Betrieb eines entsprechenden Asynchrongenerators ist eine Umrichterschaltung zwischen diesem und dem Spannungsnetz, in das der Asynchrongenerator Energie einspeisen soll, notwendig. Umrichterschaltungen für doppeltgespeiste Asynchrongeneratoren in Windmühlen sind sehr verbreitet und weisen in der Regel einen Drehstromumrichter an der Rotorseite, Zwischenkreiskondensatoren und einen netzseitigen Umrichter auf. Eine derartige klassische Umrichterschaltung für einen doppeltgespeisten Asynchrongenerator bietet die beiden oben genannten Vorteile, ist aber entsprechend teuer.

Aus der US 7,015,595. B2 ist eine einfache Lösung für den doppeltgespeisten Asynchrongenerator bekannt, die eine Geschwindigkeitsregelung im Untersynchronbereich bietet. "Unter-/Über-synchron" bezieht sich hierbei auf die sogenannte Synchrondrehzahl bzw. Nenndrehzahl des Asynchrongenerators und bedeutet eine Rotordrehzahl kleiner/größer der Synchrondrehzahl. Die Energieausbeute bei niedrigen Windgeschwindigkeiten ist dadurch erhöht. Bei plötzlicher Erhöhung der Windgeschwindigkeit ist allerdings der Windmühlenturm nicht entlastet.

Aus der DE 10 2004 003 657 A1 ist eine Lösung für Windmühlen mit Asynchrongenerator mit kurzgeschlossenen Rotor und Leistungselektronikantrieb für kleinere Leistungen mit besserer Windenergieausbeute bei niedrigen Windgeschwindigkeiten bekannt. Auch hier ist der Windmühlenturm bei starken Erhöhungen der Windgeschwindigkeit nicht entlastet.

Aus dem Stand der Technik ist eine alternative Möglichkeit für die Turmentlastung bekannt. Dort ist im Rotorkreis ein Widerstand eingesetzt, der im Fall höherer Windgeschwindigkeiten eingeschaltet wird. Der Rotorstrom fließt dann über den Widerstand. Hierdurch kann die Windmühle die Rotationsgeschwindigkeit erhöhen, zusätzliche Windenergie wird in zusätzlicher kinetischer Energie der Windmühle gespeichert und der Turm wird mechanisch entlastet. Da der Turm mechanisch entlastet ist, kann die Turmkonstruktion einfacher und kostengünstiger ausgeführt sein. Die "Optislip"-Schaltung mit Widerstand befindet sich gänzlich im Rotor bzw. rotiert mit diesem, Kontaktringe sind also nicht vorhanden. Die Rotorenergie heizt den Widerstand und dadurch den Rotor und damit den Generator zusätzlich auf. Daher ist in der Praxis der Übersynchronbetrieb zur Turmentlastung auf kurzfristig wenige Prozent begrenzt.

Weiterhin ist aus der US 2003/0151259 A1 eine Umrichterschaltung für einen, mit einem Stator an einem Stromnetz anschließbaren doppelt gespeisten Asynchrongenerator mit variabler Leistungsabgabe bekannt. An dem Rotor des Asynchrongenerators ist ein mit dem Stromnetz verbundener Stromrichter mit Zwischenkreis bekannt. Netzseitig weist dieser Stromrichter einen Gleichrichter sowie generatorseitig einen Wechselrichter auf.

Ebenso ist aus der EP 1 313 206 A2 gemäß dem dort zitierten Stand der Technik bekannt innerhalb eines Stromrichters bestehend aus einem Eingangsgleichrichter einem Zwischenkreis und einem Ausgangswechselrichters eine Hochsetzsteller vorzusehen.

Aufgabe der vorliegenden Erfindung ist es, eine verbesserte Umrichterschaltung mit einem Asynchrongenerator mit variabler Leistungsabgabe anzugeben.

Die Aufgabe wird gelöst durch eine Umrichterschaltung mit einem mit seinem Stator an einem Spannungsnetz anschließbaren, doppeltgespeisten Asynchrongenerator mit variabler Leistungsabgabe, insbesondere einen Windkraftgenerator. Die Umrichterschaltung umfasst einen am Rotor des Asynchrongenerators anschließbaren Rotorgleichrichter mit zwei Gleichspannungsausgängen, und einen am Spannungsnetz anschließbaren Netzumrichter mit zwei Gleichspannungseingängen. Die Umrichterschaltung enthält weiterhin einen Zwischenkreis, welcher je einen der Gleichspannungsausgänge mit einem der Gleichspannungseingänge über eine Verbindungsleitung verbindet. Der Zwischenkreis weist einen, zwischen den Gleichspannungsausgängen angeordneten Halbleiterschalter und einen zwischen den Gleichspannungseingängen angeordneten Zwischenkreiskondensator auf. Weiterhin enthält der Zwischenkreis eine, in einer der Verbindungsleitungen zwischen Halbleiterschalter und Zwischenkreiskondensator angeordnete Diode.

Die Wechselspannung liefernden Rotorwindungen des Rotors sind also über Kontaktringe auf den Rotorgleichrichter, in der Regel einen Diodengleichrichter, geführt. Dieser wandelt die vom Rotor kommenden Wechselspannungen bzw. -ströme in eine Gleichspannung zwischen den Gleichspannungsausgängen um. Über den Halbleiterschalter kann diese gleichgerichtete Spannung kurzgeschlossen werden. Der Asynchrongenerator verhält sich dann wie ein Generator mit kurzgeschlossenem Rotor. Der zum Spannungsnetz hin liegende Wechselrichter ist somit von der Generatorseite bzw. dem Rotor getrennt, da die Diode nichtleitend, also in Gegenrichtung polarisiert ist.

Durch die erfindungsgemäße Lösung ist der übersynchrone Bereich des Generators ausgedehnt, da die überschüssige Leistung nicht in einem Widerstand vernichtet, sondern in das Spannungsnetz eingespeist wird. Die notwendigen Dioden im Gleichrichter sind hierbei gegenüber den bekannten Lösungen mit einem generatorseitigen Rotorumrichter kostengünstiger. Die gesamte Lösung ist deutlich billiger als eine entsprechende bauliche Maßnahme zur Turmverstärkung bei einer Windmühle.

Ein Asynchrongenerator, insbesondere in einer Windmühle, mit kurzgeschlossenem Rotor startet normalerweise über einen Softstarter (W3C). Bei der erfindungsgemäßen Umrichterschaltung ist ein Softstarter nicht notwendig. Der Asynchrongenerator bzw. Windkraftgenerator startet nämlich auf einfache Weise. Der gleichgerichtete Rotorstrom kann durch den Halbleiterschalter gesteuert werden und die Rotorenergie kann kontrolliert an den Zwischenkreis übergeben werden. Der Wechselrichter speist diese Energie dann weiter ins Spannungsnetz. Der Windkraftgenerator startet dann wie mit einem Rotorwiderstand, nur dass die Energie eben nicht in einem Widerstand vernichtet, sondern ins Netz zurückgespeist wird.

Die Windmühle kann auch auf eine andere Weise gestartet werden, nämlich wenn der Netzumrichter am Netz angeschlossen und der Zwischenkreiskondensator geladen ist. Die Zwischenkreisspannung am Zwischenkreiskondensator bzw. zwischen den Gleichspannungseingängen bzw. den Gleichspannungsausgängen des Gleichrichters ist dann höher als die Netzspannung bzw. deren Scheitelwert und beträgt z.B. 1050V für eine Netzspannung von 3*690V. Die Statorwindungen des Asynchrongenerators sind dann nicht am Netz angeschlossen. Der Wind beschleunigt den Generator im Leerlauf. Erreicht die Generatorgeschwindigkeit die Nähe der Synchrongeschwindigkeit, wird die Statorwindung am Netz angeschlossen. Der Halbleiterschalter, welcher als Rotorkurzschließer arbeitet, bleibt hierbei noch stets offen, ist also nicht leitend.

Die erfindungsgemäße Umrichterschaltung ist kostengünstig, ermöglicht Übersynchrongeschwindigkeit des Generators und eine Entlastung der Turmkonstruktion in Windkraftanlagen. Im Übersynchronbereich sind variable Geschwindigkeiten möglich.

Eine der Verbindungsleitungen enthält eine mit der Diode in Reihe geschaltete, zwischen Halbleiterschalter und Gleichspannungsausgängen angeordnete diskrete Drossel. Im Zusammenwirken mit der Drossel wirken der Halbleiterschalter und der Zwischenkreiskondensator nach Art eines Hochsetzstellers für die vom Rotor des Asynchrongenerators gelieferte Spannung nach deren Gleichrichtung. Insbesondere beim Öffnen des Halbleiterschalters wird so durch die Drossel der im Zwischenkreis fließende Strom aufrechterhalten. Zum Betrieb der Schaltung als z.B. Hochsetzsteller kann allerdings alternativ auch nur die immer vorhandene parasitäre Drossel im Asynchrongenerator (Rotor) verwendet werden, falls dies die Dimensionierung zulässt.

Die Nennspannung am Rotor des Asynchrongenerators ist höher als die Nennspannung des Stators. Insbesondere kann diese zumindest doppelt bis vierfach so hoch sein. Die Rotorwindungen sind dann z.B. für die höhere, z.B. doppelte oder vierfache Spannung wie die Ankerwicklungen ausgelegt.

Ist die Rotorwindung des Asynchrongenerators z.B. für die doppelte Spannung der Ankerwicklung ausgelegt, ist die Rotorspannung bei einem 10%-igen übersynchronen Schlupf des Asynchrongenerators gleich 20% der Netzspannung. Erreicht die Rotorgeschwindigkeit 50% Schlupf, beträgt die Rotorspannung 100%, also im obigen Beispiel 3*690V bei 25Hz. Diese Spannung, auch deren Scheitelwert, ist noch immer kleiner als die Zwischenkreisspannung von 1050V, weshalb der Rotorstrom noch nicht vom Rotor in den Zwischenkreiskondensator und damit ins Spannungsnetz fließen kann. Hier ist dann der oben genannte Hochsetzsteller notwendig, um den Zwischenkreiskondensator aus dem Rotor laden zu können. Für ein Spannungsverhältnis Rotor zu Stator von zwei ist also die minimale Rotorgeschwindigkeit, bei welcher der Stator bzw. die Ankerwindungen am Netz angeschaltet werden dürfen, 50% der Synchrongeschwindigkeit.

Ist der Stator ans Spannungsnetz angeschlossen und die Rotorspannung kleiner als die Zwischenkreisspannung, beschleunigt der Asynchrongenerator weiter und die induzierte Rotorspannung wird immer kleiner, je höher die Geschwindigkeit wird, bzw. je näher sie der Synchrongeschwindigkeit kommt.

Kommt die Rotorspannung schließlich bei Erreichen der Synchrongeschwindigkeit in Null-Nähe, wird der Halbleiterschalter eingeschaltet, also kurzgeschlossen. Der Asynchrongenerator verhält sich dann wie ein Asynchrongenerator mit kurzgeschlossenem Rotor. Dieses Verhalten behält der Asynchrongenerator, solange der Halbleiterschalter leitend ist.

Wird der Halbleiterschalter kurz ausgeschaltet, fließt der gleichgerichtete Rotorstrom im Zwischenkreis weiter. Falls nun die Windstärke plötzlich zunimmt, kann der Asynchrongenerator auf diese Weise beschleunigen.

Der Asynchrongenerator kann für zwei Synchrongeschwindigkeiten (Nenndrehzahlen) ausgelegt sein, beispielsweise für 1000U/min und 1500U/min. Eine übersynchrone Geschwindigkeitsregelung ist dann für beide Geschwindigkeiten einsetzbar. Für niedrige Geschwindigkeiten ist der Regelungsbereich deutlich größer als für höhere Geschwindigkeiten. Für niedrige Synchrongeschwindigkeit ist die Generatorleistung wesentlich kleiner und deswegen die zulässige Rotor-Umrichterleistung als eingeprägte Größe des Umrichters relativ hierzu höher. Auf diese Weise sind die Regelungseigenschaften für niedrige Synchrongeschwindigkeit wesentlich weitreichender.

Beispielsweise bei einem 1MW-Generator mit Nenndrehzahl 1500 ist bei Drehzahl n=1000 die tatsächliche abgegebene Leistung wegen 1000³/1500³ gleich 296kW. Wenn die Rotorumrichterleistung für 20% der Generatorleistung ausgelegt ist (200kW), ist die maximale Geschwindigkeit 6,3% höher, also ist eine Maximaldrehzahl von ca. n=1600 erlaubt. Für die niedrigere Nenndrehzahl, also n=1000 und die Nennleistung 296kW ist die dynamische Geschwindigkeitserhöhung mit 200kW Rotorumrichterleistung aber ca. 19%, also wesentlich höher als 6,3%. Daher ist die Anpassung des Asynchrongenerators bzw. der Windmühle für niedrige Windgeschwindigkeiten sehr flexibel und die Energieausbeute bei niedrigen Geschwindigkeiten wesentlich besser als bei Windmühlen mit konstanter Nenndrehzahl.

Hinsichtlich des Verfahrens wird die Aufgabe gelöst durch ein Verfahren zum Betrieb einer Umrichterschaltung wie oben erläutert, bei dem der Halbleiterschalter während des untersynchronen Betriebs des Asynchrongenerators geschlossen gehalten wird, und der Halbleiterschalter im synchronen und übersynchronen Betrieb des Asynchrongenerators zumindest zeitabschnittsweise geöffnet wird.

Das Regelungsverfahren ist einfach. Wenn der Halbleiterschalter für kurze Zeit geöffnet, also nicht leitend geschaltet wird, fließt der gleichgerichtete Rotorstrom, insbesondere bei Verwendung der o.g. diskreten Drossel, weiter in den Zwischenkreiskondensator. Die Spannung des Zwischenkreiskondensators würde sich erhöhen, aber der Netzumrichter entlädt den Zwischenkreiskondensator und hält die Zwischenkreisspannung konstant. Die Energie aus dem Rotor des Asynchrongenerators fließt also ins Spannungsnetz. Dies ist das sogenannte DFIG-(double fed induction generator)-Prinzip. Je länger hierbei der Halbleiterschalter in der Schaltperiode geöffnet wird, desto höher wird die Rotorspannung und desto größer die abgegebene Rotorenergie. Hierdurch erhöht sich auch die Rotorgeschwindigkeit, die Windmühle speist also Energie durch die Statorwindungen und Rotorwindungen in das Spannungsnetz; das DFIG-Prinzip ist im Einsatz.

Auch wenn die Diode sperrt bzw. der Asynchrongenerator steht, ist der Wechselrichter weiterhin an der Netzseite angeschlossen und kann in Betrieb bleiben. Dies ermöglicht eine Blindleistungskompensation, Netzspannungsregelung oder cos-ϕ-Regelung. Der Wechselrichter kann dann nach Bedarf kapazitive oder induktive Blindleistung für das Spannungsnetz liefern und dadurch den Leistungsfaktor des Generators in der Nähe von 1 halten und/oder nach Bedarf die Netzspannung stabilisieren. Die Produktion von kapazitiver Blindleistung erhöht die NetzSpannung, die Aufnahme von induktiver Blindleistung senkt die Netzspannung ab.

Das erfindungsgemäße Verfahren wurde ansonsten zusammen mit seinen Vorteilen bereits im Zusammenhang mit der erfindungsgemäßen Umrichterschaltung erläutert.

Für einer weitere Beschreibung der Erfindung wird auf die Ausführungsbeispiele der Zeichnung verwiesen. Es zeigt in einer schematischen Prinzipskizze:

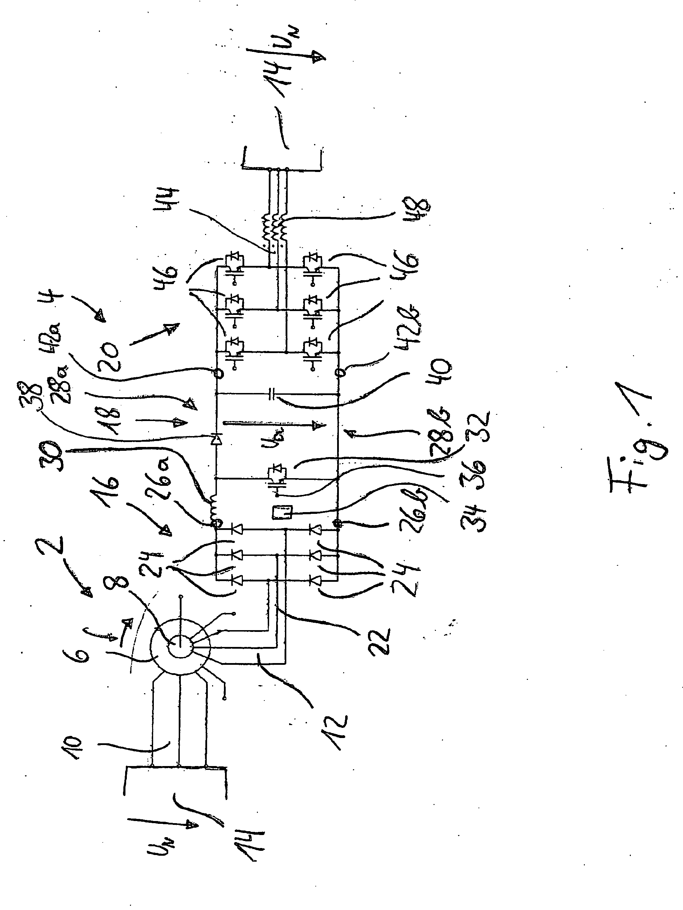

Fig. 1 einen Asynchrongenerator einer Windkraftanlage mit erfindungsgemäßer Umrichterschaltung.

Fig. 1 zeigt einen Asynchrongenerator 2 einer nicht dargestellten Windkraftanlage mit einer dazugehörigen, erfindungsgemäßen Umrichterschaltung 4. Der Asynchrongenerator 2 umfasst einen Stator 6 und einen Rotor 8, welche jeweils Statoranschlüsse 10 und Rotoranschlüsse 12 aufweisen. Die Statoranschlüsse 10 sind an einem Spannungsnetz 14 mit Nennspannung U_{N}=3*690V angeschlossen. Der vom nicht dargestellten Windrad und Getriebe des Windkraftgenerators angetriebene Rotor 8 ist mit seinen Rotoranschlüssen 12 mit der Umrichterschaltung 4 verbunden. Der Asynchrongenerator 2 ist für zwei verschiedenen Synchrongeschwindigkeiten n_{s1,2} von 1000 und 1500U/min ausgelegt.

Die Umrichterschaltung 4 weist im Wesentlichen drei Teilschaltungen, nämlich einen Gleichrichter 16, einen Zwischenkreis 18 und einen Wechselrichter 20 auf. Der Gleichrichter 16 weist Wechselspannungseingänge 22 auf, welche mit den Rotoranschlüssen 12 des Asynchrongenerators 2 verbunden sind, und über welche Wechselspannung bzw. Wechselstrom vom Rotor 8 zum Gleichrichter 16 übertragen wird. Die Wechselspannungseingänge 22 sind im Gleichrichter 16 über Dioden 24 in bekannter Art und Weise mit Gleichspannungsausgängen 26a,b verschaltet.

An den Gleichspannungsausgängen 26a,b ist der Zwischenkreis 18 bzw. Hochsetzsteller, angeschlossen, nämlich mit seinen beidem Längszweigen 28a,b. Im Längszweig 28a ist eine mit dem Gleichspannungsausgang 26a verbundene Drossel 30 angeordnet, gefolgt von einem die Längszweige 28a,b verbindenden IGBT 32. Dieser wirkt als elektronisch steuerbarer Halbleiterschalter, welcher also durch ein entsprechendes Schaltsignal 34 an seinem Eingang 36 die Längszweige 28a,b kurzschließen kann. Auf Drossel 30 und Anschluss des IGBT 32 folgt im Längszweig 28a eine in Durchlassrichtung angeordnete Diode 38 und auf diese wiederum ein die Längszweige 28a,b verbindender Zwischenkreiskondensator 40.

An den Zwischenkreiskondensator 40 schließen sich Gleichspannungseingänge 42a,b des Wechselrichters 20 an. Der Wechselrichter 20 enthält zwischen den Gleichspannungseingängen 42a,b und seinen Wechselspannungsausgänge 44 in bekannter Weise verschaltete IGBTs 46. Die Wechselspannungsausgänge 44 sind über Netz(filter)drosseln 48 wiederum mit dem Spannungsnetz 14 verbunden.

Die Zwischenkreisspannung U_{DC} am Zwischenkreiskondensator 40 beträgt 1050V für 3x690V-Netze. Im untersynchronen Betrieb, wenn also die Drehzahl n des Rotors 8 unterhalb der Nenndrehzahl bzw. der kleineren Synchrondrehzahl bzw. -geschwindigkeit nₛ₁ von 1000U/min ist, bleibt der IGBT 32 dauerhaft geschlossen, also die Längszweige 28a,b elektrisch verbunden, weshalb auch die Gleichspannungsausgänge 26a,b des Gleichrichters 16 elektrisch verbunden sind und über den Gleichrichter 16 die Rotoranschlüsse 12 und damit der Rotor 8 ebenfalls kurzgeschlossen sind.

Ab der Synchrongeschwindigkeit des Rotors 8 wird der IGBT 32 geöffnet, so dass die Rotoranschlüsse 12 nicht weitere kurzgeschlossen sind, sondern die vom Rotor 8 kommende elektrische Energie im Gleichrichter 16 in Form von Gleichspannung bzw. Gleichstrom gleichgerichtet wird und über die Gleichspannungsausgänge 26a,b in die Längszweige 28a,b des Zwischenkreises 18 eingespeist wird. Dort lädt der Strom den Zwischenkreiskondensator 40 über die Diode 38. Sobald der Zwischenkreiskondensator 40 überladen ist, kann.dieser über den Wechselrichter 20 zum Netz 14 hin wieder entladen werden und so elektrische Energie vom Rotor 8 zum Netz 14 rückgespeist werden,

Falls die Spannung zwischen den Gleichspannungsausgängen 26a,b hierzu nicht ausreicht, kann der IGBT 32 in bekannter Weise angesteuert werden, so dass dieser mit der Drossel 30 und der Diode 38 und dem Zwischenkreiskondensator 40 nach Art eines Hochsetzstellers zusammenwirkt, um die vom Rotor 8 kommende gleichgerichtete Spannung auf Höhe der Zwischenkreisspannung U_{DC} zu pumpen.

Im Betrieb als Hochsetzsteller wird also der IGBT 32 durch entsprechende Schaltsignale 34 zeitabschnittsweise geöffnet und geschlossen z.B. mit einer üblichen Schaltfrequenz eines Hochsetzstellers von 1-10kHz. Im Betrieb zwischen der Synchronfrequenz, wenn also die Rotordrehzahl n etwa der Synchrongeschwindigkeit fₛ₁ entspricht und einer etwa 20%-ig übersynchronen Rotordrehzahl n=1,2*nₛ₁ arbeitet der Hochsetzsteller.

Die Maximalgeschwindigkeit des Asynchrongenerators 2 ist durch die Leistung der Umrichterschaltung 4 begrenzt. Beträgt die maximale Rotorumrichterleistung z.B. 20% der Nennleistung des Generators, ist die maximale Windmühlengeschwindigkeit auf das 1,063-fache der Synchrongeschwindigkeit bzw. -drehzahl Nₛ begrenzt, also 6,3% höher als diese. Die Windmühlenleistung beträgt dann - wegen 1,063³=1,2 - 120% der Generatornennleistung. Ist der Asynchrongenerators 2 in der Konfiguration für niedere Drehzahl (kleinere Synchrongeschwindigkeit) angeschlossen, ist die relative Geschwindigkeitserhöhung größer. Bei der Hälfte der Nennwindgeschwindigkeit, also der halben Synchrongeschwindigkeit n=1/2 Nₛ ist die zur Verfügung stehende Windleistung (0,5n)³/n³=1/8=12,5% der Nennleistung. Der Windgeschwindigkeitsregelungsbereich ist damit 50% bis 69%, der Leistungsregelungsbereich 12,5% bis 32,5%.

### Bezugszeichenliste

- 2: Asynchrongenerator
- 4: Umrichterschaltung
- 6: Stator
- 8: Rotor
- 10: Statoranschluss
- 12: Rotoranschluss
- 14: Spannungsnetz
- 16: Gleichrichter
- 18: Zwischenkreis
- 20: Wechselrichter
- 22: Wechselspannungseingang
- 24: Diode
- 26a,b: Gleichspannungsausgang
- 28a,b: Längszweig
- 30: Drossel
- 32: IGBT
- 34: Schaltsignal
- 36: Eingang
- 38: Diode
- 40: Zwischenkreiskondensator
- 42a,b: Gleichspannungseingänge
- 44: Wechselspannungsausgang
- 46: IGBT
- 48: Netz(filter)drossel

- U_{DC}: Zwischenkreisspannung
- U_{N}: Nennspannung
- n_{s1,2}: Synchrongeschwindigkeit
- n: Motordrehzahl

## Patentansprüche

1. Umrichterschaltung (4) mit einem, mit seinem Stator (6) an einem Spannungsnetz (14) anschließbaren doppeltgespeisten Asynchrongenerator (2) mit variabler Leistungsabgabe, insbesondere für einen Windkraftgenerator, mit einem am Rotor (8) des Asynchrongenerators (2) anschließbaren Rotorgleichrichter (16) mit zwei Gleichspannungsausgängen (26a,b), mit einem am Spannungsnetz (14) anschließbaren Netzumrichter (20) mit zwei Gleichspannungseingängen (42a,b) und mit einem, je einen der Gleichspannungsausgänge (26a,b) mit einem der Gleichspannungseingänge (42a,b) über eine Verbindungsleitung (28a,b) verbindenden Zwischenkreis (18), wobei der Zwischenkreis (18) einen zwischen den Gleichspannungsausgängen (26a,b) angeordneten Halbleiterschalter (32), einen zwischen den Gleichspannungseingängen (42a,b) angeordneten Zwischenkreiskondensator (40), und eine in einer der Verbindungsleitungen (28a,b) zwischen Halbleiterschalter (32) und Zwischenkreiskondensator (40) angeordnete Diode (38) enthält, wobei
eine der Verbindungsleitungen (28a,b) eine mit der Diode (38) in Reihe geschaltete, zwischen Halbleiterschalter (32) und Gleichspannungsausgängen (26a,b) angeordnete Drossel (30) enthält und wobei
die Nennspannung (U_{N}) am Rotor (8) höher, insbesondere zumindest annähernd doppelt bis vierfach höher, als die Nennspannung (U_{N}) des Stators (6) ist.

2. Umrichterschaltung (4) nach Anspruch 1, bei der der Asynchrongenerator (2) für zwei Synchrongeschwindigkeiten (fₛ₁,₂) ausgelegt ist.

3. Verfahren zum Betrieb einer Umrichterschaltung (4) gemäß einem der Ansprüche 1 oder 2, bei dem:
- der Halbleiterschalter (32) während des untersynchronen Betriebs des Asynchrongenerators (2) geschlossen gehalten wird,
- der Halbleiterschalter (32) im synchronen und übersynchronen Betrieb des Asynchrongenerators (4) zumindest Zeitabschnittsweise geöffnet wird.

4. Verfahren nach Anspruch 3, bei dem der Netzumrichter (20) betreibbar ist, wenn der Asynchrongenerator (2) nicht im Betrieb ist.

## Claims

1. A converter circuit (4) with a double-fed asynchronous generator (2) with a variable power output, which can be connected via its stator (6) with a voltage grid (14), in particular for a wind power generator, with a rotor rectifier (16) with two DC voltage outputs (26a,b), which can be connected to the rotor (8) of the asynchronous generator (2), with a grid inverter (20) with two DC voltage inputs (42a,b), and with an intermediate circuit (18) connecting in each case one of the DC voltage outputs (26a,b) with one of the DC voltage inputs (42a,b) via a connecting line (28a,b), wherein
the intermediate circuit (18) includes a semiconductor switch (32) arranged between the DC voltage outputs (26a,b), an intermediate circuit capacitor (40) arranged between the DC voltage inputs (42a,b), and a diode (38) arranged in one of the connecting lines (28a,b) between the semiconductor switch (32) and the intermediate circuit capacitor (40), wherein
one of the connecting lines (28a,b) includes a choke (30) connected in series with the diode (38), arranged between the semiconductor switch (32) and the DC voltage outputs (26a,b), and wherein.
the nominal voltage (UN) at the rotor (8) is higher, in particular at least approximately two to four times higher than the nominal voltage (UN) of the stator (6).

2. The converter circuit (4) according to Claim 1, in which the asynchronous generator (2) is designed for two synchronous speeds (fs1,2).

3. A method for the operation of a converter circuit (4) according to one of the Claims 1 or 2, in which:
- the semiconductor switch (32) is held closed during sub-synchronous operation of the asynchronous generator (2),
- the semiconductor switch (32) is opened in synchronous and super-synchronous operation of the asynchronous generator (2), at least for some periods of time.

4. The method according to Claim 3, in which the grid inverter (20) can be operated if the asynchronous generator (2) is not in operation.

## Revendications

1. Circuit commutateur (4) comprenant un générateur asynchrone (2) à double alimentation, pouvant être raccordé avec un stator (6) à un réseau d'alimentation (14), avec puissance débitée variable, en particulier pour une génératrice éolienne, un redresseur de rotor (16) pouvant être raccordé au rotor (8) du générateur asynchrone (2) avec deux sorties de tension continue (26a, b), un commutateur de réseau (20) pouvant être raccordé au réseau de tension (14) avec deux entrées de tension continue (42a, b) et un circuit intermédiaire (18) reliant l'une des sorties de tension continue (26a, b) à l'une des entrées de tension continue (42a, b) au moyen d'une ligne de liaison (28a, b), le circuit intermédiaire (18) contenant un commutateur statique (32) disposé entre les sorties de tension continue (26a, b), un condensateur de circuit intermédiaire (40) disposé entre les entrées de tension continue (42a, b) et une diode (38) disposée dans l'une des lignes de liaison (28a, b) entre le commutateur statique (32) et le condensateur à circuit intermédiaire (40), l'une des lignes de liaison (28a, b) contenant un clapet (30) branché en série avec la diode (38) et disposé entre le commutateur statique (32) et des sorties de tension continue (26a, b) et
la tension nominale (UN) sur le rotor (8) étant supérieure, en particulier au moins approximativement deux à quatre fois supérieure à la tension nominale (UN) du stator (6).

2. Circuit commutateur (4) selon la revendication 1, sur lequel le générateur asynchrone (2) est conçu pour deux vitesses synchrones (f_{s1,2}).

3. Procédé pour le fonctionnement d'un circuit commutateur (4) selon l'une quelconque des revendications 1 ou 2, sur lequel :
- le commutateur statique (32) est maintenu fermé pendant le fonctionnement hyposynchrone du générateur asynchrone (2),
- le commutateur statique (32) est ouvert au moins par périodes pendant le fonctionnement synchrone et hypersynchrone du générateur asynchrone (4).

4. Procédé selon la revendication 3, avec lequel le commutateur de réseau (20) peut être exploité lorsque le générateur asynchrone (2) n'est pas en service.
